# EUROPÄISCHE PATENTSCHRIFT

(11) **EP 2 321 556 B1**
(45) Veröffentlichungstag und Bekanntmachung des Hinweises auf die Patenterteilung: **30.04.2014**
(21) Anmeldenummer: 09778171.0
(22) Anmeldetag: 28.08.2009
(51) Int. Cl.: F16H 57/027, H02K 5/12, H02K 7/116, H02K 9/19, H02K 11/00, H02K 5/04

(54) **KOMPAKTANTRIEB**
COMPACT DRIVE
ENTRAÎNEMENT COMPACT

(30) Priorität: 09.09.2008 DE 102008046446
(43) Veröffentlichungstag der Anmeldung: 18.05.2011
(73) Patentinhaber: SEW-EURODRIVE GmbH & Co. KG, 76646 Bruchsal (DE)
(72) Erfinder: KERSCHBAUM, Martin, 76139 Karlsruhe (DE)
(86) Internationale Anmeldenummer: PCT/EP2009/006240
(87) Internationale Veröffentlichungsnummer: WO 2010/028753

(56) Entgegenhaltungen:
- DE-A1- 19 500 350
- DE-A1-102006 060 865
- DE-C1- 19 940 235

## Beschreibung

Die Erfindung betrifft einen Kompaktantrieb, entsprechend dem Oberbegriff des Anspruchs 1.

Es ist bekannt, bei einem Getriebemotor einen Elektromotor und ein Getriebe verbunden vorzusehen. Getriebemotoren und auch Getriebemotoren mit integrierter Speiseschaltung für den Elektromotor sind als Kompaktantrieb bezeichenbar.

Aus der DE 10 2006 060 865 A1 ist als nächstkommender Stand der Technik eine Vorrichtung mit durch Membranen getrennten Raumberiechen bekannt.

Aus der DE195 00 350 A1 ist ein Hydraulikaggregat mit einem semipermeablen Belüftungselement und mit einem kolben zum Druckausgleich bekannt.

Aus der DE 199 40 235 C1 ist ein Planetengetriebe mit eines umstülpbaren Membran als Druckausgleichselement bekannt.

Der Erfindung liegt die Aufgabe zugrunde, die Standzeit bei einem Kompaktantrieb zu verbessern.

Erfindungsgemäß wird die Aufgabe bei dem Kompaktantrieb nach den in Anspruch 1 angegebenen Merkmalen gelöst.

Wichtige Merkmale der Erfindung bei dem Kompaktantrieb sind, dass der Kompaktantrieb zumindest einen Raumbereich für Getriebe, einen Raumbereich für einen Elektromotor und einen Raumbereich für eine elektronische Schaltung umfasst,
wobei Druckausgleichsmittel in dem Raumbereich für das Getriebe angeordnet sind und den Raumbereich für das Getriebe und den Raumbereich für den Elektromotor druckausgleichend verbinden, vorzugsweise Öl- und Luftdicht verbinden.

Von Vorteil ist dabei, dass der Druckunterschied zwischen dem Raumbereich im Getriebe und der Umgebung über den Raumbereich des Elektromotors ausgleichbar ist und somit die Standzeit abdichtender Wellendichtringe verbessert sind. Hierzu zählen sowohl ein Wellendichtring, der zur Umgebung hin abdichtet, und ein Wellendichtring, welcher zum Raumbereich des Elektromotors hin abdichtet. Als Schmieröl ist somit ein flüssiges Öl verwendbar und der Raumbereich des Getriebes teilweise befüllbar. Die im Raumbereich des Getriebes verbleibende Luft trägt hierbei wesentlich zum ausgeglichenen Druckunterschied bei.

Bei einer vorteilhaften Ausgestaltung ist das Druckausgleichsmittel in einem Teilbereich des Raumbereiches des Getriebes angeordnet, der bei einem gedachten Umlauf eines Verzahnungsteils am Umfang eines mit dem umlaufenden Verzahnungsteil im Eingriff stehenden Verzahnungstells überdeckt. Von Vorteil ist dabei, dass das Gehäuse des Kompaktantriebs derart konvex ausführbar ist, dass Flüssigkeiten gut abfließen, und der dadurch erhöhte Raumbedarf genutzt ist für die Druckausgleichsmittel.

Bei einer vorteilhaften Ausgestaltung umfasst das Getriebe zumindest eine in einer Ebene angeordnete Zahnräder umfassende Stirnradstufe, wobei die Druckausgleichsmittel in der Ebene der Zahnräder angeordnet sind. Von Vorteil ist dabei, dass das zusätzliches Bauvolumen für die Druckausgleichmittel gleichzeitig dazu führt, dass Flüssigkeiten in verschiedenen Montageorientierungen an der Oberfläche des Gehäuses gut abfließen.

Bei einer vorteilhaften Ausgestaltung sind die Druckausgleichsmittel in einer zu den Achsen der Zahnräder des Getriebes senkrechten Ebene angeordnet. Von Vorteil ist dabei, dass der für das Abfließen von Flüssigkeiten an der Oberfläche des Gehäuses notwendige Raumbereich ausgenutzt ist.

Bei einer vorteilhaften Ausgestaltung ist die elektronische Schaltung als Umrichter oder als Sanftanlaufelektronik für den Elektromotor ausgeführt. Von Vorteil ist dabei, dass die Drehzahl und das Drehmoment des Elektromotors steuerbar und/oder zumindest als Schätzwert bestimmbar ist und somit auch die Leistung bestimmbar ist, woraus eine Temperaturbestimmung für den Raumbereich des Getriebes ausführbar ist. Auf diese Weise ist auch das auszugleichende Volumen bestimmbar und bei Überschreiten der Ausgleichskapazität des Druckausgleichsmittels eine Warnung herausgebbar oder ein Abschalten des Antriebs ausführbar.

Bei einer vorteilhaften Ausgestaltung ist aus der elektronischen Schaltung der Elektromotor speisbar, wobei mittels des Elektromotors das Getriebe antreibbar ist Von Vorteil ist dabei, dass hohe Abtriebsdrehmomente erreichbar sind und das zusätzliche Bauvolumen für den Motor und die elektronische Schaltung für den Druckausgleich im erwärmten Getriebe nutzbar sind.

Bei einer Ausgestaltung, welche nicht Inhalt der Erfindung ist, sind der Raumbereich des Elektromotors und der Raumbereich der elektronischen Schaltung mittels einer luftdurchlässigen Öffnung im Gehäuseteil verbunden. Von Vorteil ist dabei, dass einerseits ein Druckausgleich des schmierölhaltigen Raumbereichs des Getriebes zum luftbefüllten Raumbereich des Elektromotors hin ausführbar ist und andererseits ein Luftdruckausgleich von diesem Raumbereich über den Raumbereich der elektronischen Schaltung hin zur Umgebung ausführbar ist.

Bei einer Ausgestaltung, welche nicht Inhalt der Erfindung ist, ist der Raumbereich der elektronischen Schaltung zur Umgebung hin über eine derartige semipermeable Membran verbunden, dass die semipermeable Membran zum Druckausgleich von Luft durchströmbar ist, jedoch flüssiges Wasser und/oder Wasserdampf nicht durch die semipermeable Membran hindurchtritt. Von Vorteil ist dabei, dass sich kein Wasser im Motorraumbereich ansammelt und somit die Korrosionsgefahr vermindert wird.

Bei einer weiteren Ausgestaltung, welche nicht Inhalt der Erfindung ist, umfassen die Druckausgleichsmittel eine umstülpbare Membran, insbesondere wobei die Membran eingeklemmt vorgesehen ist zwischen einem Gehäuseteil und einem Gehäusedeckel oder zwischen einer im Gehäuseteil aufgenommenen erste Hülsenteil und einer im Gehäusedeckel aufgenommenen zweiten Hülsenteil. Von Vorteil ist dabei, dass eine einfache Herstellung der Druckausgleichsmittel dadurch vorsehbar ist, dass beim Aufstecken und Verbinden des Gehäusedeckels auf das Gehäuseteil die Membran nur zwischengelegt werden muss und dann das Verbinden des Gehäusedeckels mit dem Gehäuseteil ausführbar ist.

Erfindungsgemäß umfassen die Druckausgleichsmittel einen Faltenbalg. Von Vorteil ist dabei, dass einfache kostengünstige Mittel ausreichend sind.

Bei einer Ausgestaltung, welche nicht Inhalt der Erfindung ist, umfassen die Druckausgleichsmittel einen Kunststoffbehälter. insbesondere in welchen eine umstülpbare Membran einvulkanisiert vorgesehen ist. Von Vorteil ist dabei, dass das Druckausgleichsmittel vorfertigbar ist. Es ist dann als Ganzes einsetzbar und mit dem Gehäuseteil verbindbar.

Bei einer vorteilhaften Ausgestaltung ist das Getriebe zumindest teilweise mit Schmieröl und/oder Luft befüllt. Von Vorteil ist dabei, dass das Getriebe optimal geschmiert ist bei einer minimal nötigen Schmierölmenge.

Bei einer vorteilhaften Ausgestaltung ist die Abtriebswelle des Getriebes zur Umgebung hin mittels eines Wellendichtrings abgedichtet. Von Vorteil ist dabei, dass die Druckunterschiede reduzierbar sind und somit die Standzeit erhöhbar.

Bei einer vorteilhaften Ausgestaltung umfassen die Druckausgleichsmittel ein volumenveränderliches Element, wie beispielsweise einen Faltenbalg, wobei das vom Element umschlossene Volumen derart im Luftaustausch mit dem Raumbereich des Elektromotors oder mit dem Raumbereich des Getriebes steht, dass bei hoher Temperatur im Raumbereich des Getriebes das umschlossene Volumen minimal oder maximal ist. Von Vorteil ist dabei, dass hohe Temperaturunterschiede nach unten oder nach oben von einer Anfangstemperatur aus ermöglicht sind.

Bei einer vorteilhaften Ausgestaltung umfassen die Druckausgleichsmittel ein volumenveränderliches Element, dessen Volumen von der Temperatur des Getriebes bestimmt ist, insbesondere im Wesentlichen ausschließlich. Von Vorteil ist dabei, dass ein zur Temperatur proportionales Volumen vorsehbar ist.

Weitere Vorteile ergeben sich aus den Unteransprüchen.

Die Erfindung wird nun anhand von Ausführungsbeispielen unter Bezugnahme auf die Zeichnung näher erläutert. Es zeigen rein schematisch:
- Fig.1: eine dreidimensionale Schrägansicht eines erfindungsgemäßen Kompaktantriebes;
- Fig.2: einen Schnitt durch den in Figur 1 gezeigten Kompaktantrieb;
- Fig.3: einen Schnitt wie in Figur 2 einer weiteren Ausführungsform in einem Ausgangszustand;
- Fig.4: einen Schnitt der in Figur 3 gezeigten Ausführungsform in einem erwärmten Betriebszustand;
- Fig. 5: einen Schnitt wie in Figur 2 einer anderen Ausführungsform in einem Ausgangszustand;
- Fig.6: einen Schnitt der in Figur 5 gezeigten Ausführungsform in einem erwärmten Zustand;
- Fig. 7: einen Schnitt wie in Figur 2 durch eine abgeänderte Ausführungsform In einem Ausgangszustand;
- Fig. 8: einen Schnitt der in Figur 7 gezeigten Ausführungsform in einem erwärmten Zustand;
- Fig. 9: eine dreidimensionale Ansicht eines weitere Gehäuseteils für eine abgewandelte Ausführungsform des erfindungsgemäßen Kompaktantriebs.
- Fig. 10: eine dreidimensionale Ansicht eines weiteren Gehäusedeckels, welcher zu dem in Figur 9 gezeigten weiteren Gehäuseteil passt; und
- Fig. 11: einen Schnitt durch die abgewandelte Ausführungsform des erfindungsgemäßen Kompaktantriebs.

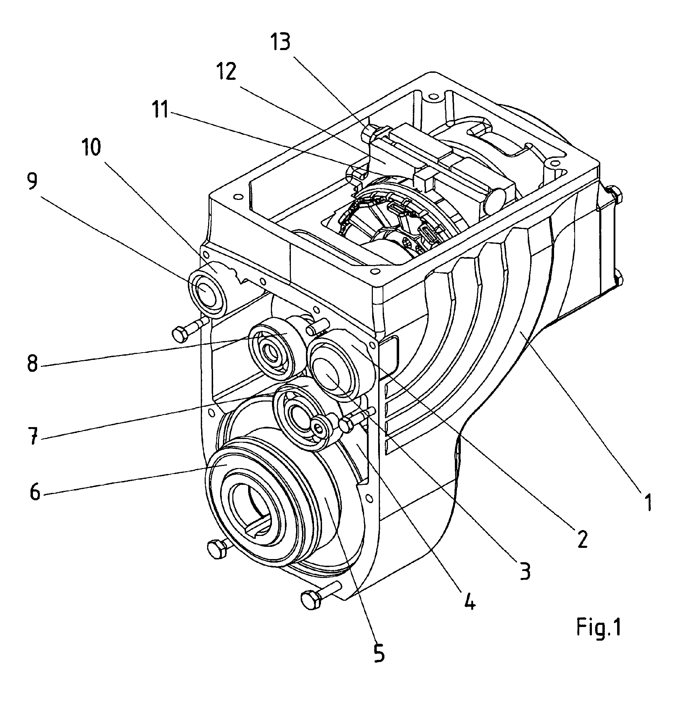

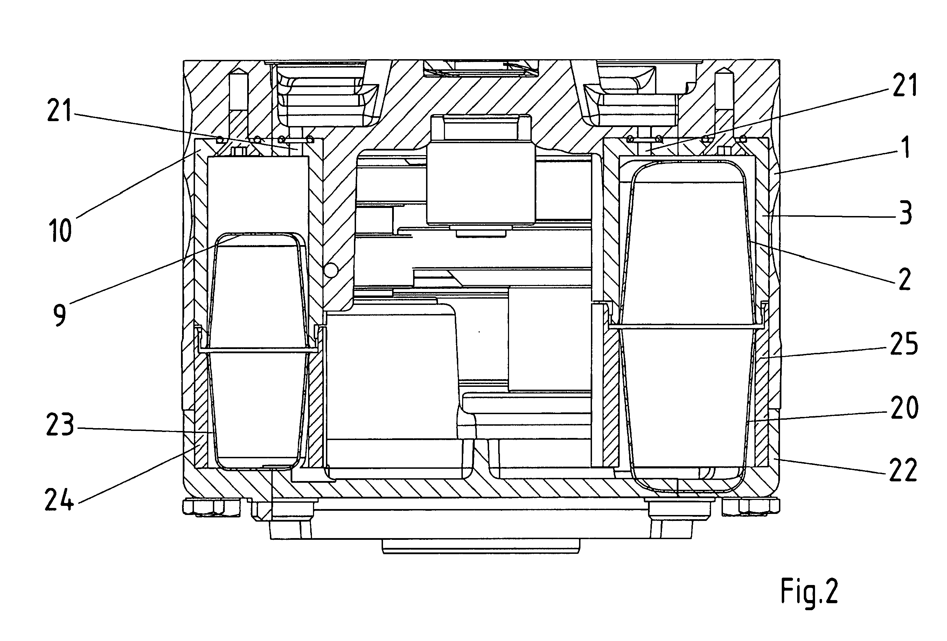

In der Figur 1 ist eine Schrägansicht auf eine erfindungsgemäße, teilweise geöffnete Vorrichtung gezeigt und die als Kompaktantrieb vorgesehen ist. In der Figur 2 ist ein zugehöriger Schnitt gezeigt.

Der Kompaktantrieb umfasst ein Gehäuseteil 1, welches zumindest teilweise gehäusebildend ist für einen Raumbereich für ein Getriebe, einen Raumbereich für einen Elektromotor und einen Raumbereich für eine elektronische Schaltung. Dabei speist die elektronische Schaltung den Elektromotor, der das Getriebe antreibt.

Der Raumbereich des Getriebes wird von einem Gehäusedeckel 22 (Figur 2) abgeschlossen, welcher mit dem Gehäuseteil schraubverbindbar ist. Dabei weist der Gehäusedeckel 22 Lagersitze für die Lager 5, 7, 8 auf. Ebenso weist das Gehäuseteil 1 Lagersitze für die Lager 5, 7, 8 einer Rotorwelle des Elektromotors, einer Zwischenwelle und einer Abtriebswelle auf.

Auf der Abtriebswelle ist das Zahnrad 4 angeordnet und mit dieser formschlüssig und/oder kraftschlüssig verbunden. Neben dem Lager 5 der Abtriebswelle wie auch dem zum Raumbereich des Elektromotors vorgesehenen Lager der Rotorwelle ist jeweils eine Abdichtung, wie ein Wellendichtring 6, vorgesehen.

Wie in den Figuren 2 bis 8 gezeigt, ragt die Rotorwelle mit einem Endbereich durch eine Ausnehmung in einer Zwischenwand in den Raumbereich des Getriebes hinein. Die Zwischenwand trennt den Raumbereich des Getriebes und den Raumbereich des Elektromotors. Auf den Endbereich der Rotorwelle ist ein Ritzel angeordnet. Die zwischen Motorwelle und Ausnehmung verbleibende Öffnung ist mittels eines weiteren Wellendichtringes abgedichtet.

Der Raumbereich des Elektromotors und der Raumbereich der elektronischen Schaltung ist mittels einer Ausnehmung miteinander verbunden, so dass Luft zwischen den Raumbereichen austauschbar ist.

Der Raumbereich der elektronischen Schaltung ist teilweise durch ein nicht dargestelltes an den Raumbereich des Elektromotors anschließendes Deckelement gebildet.

Zur Umgebung hin ist eine Entlüftungsvorrichtung vorgesehen, die einen Luftdruckausgleich zwischen der im Raumbereich der elektronischen Schaltung und der Umgebungsluft ermöglicht. Vorzugswiese wird hierbei eine semipermeable Membran verwendet, die zwar luftdurchlässig ist aber undurchlässig für Wasserdampf.

Eine erste Membran 2, 20 welche luft- und öldicht ist, ist in einer zweiteiligen Hülse 3, 25 angeordnet. Auf den ersten Hülsenteil 3 ist ein zweites Hülsenteil 25 aufgesetzt. Dadurch ist ein Randbereich der ersten Membran 2, 20 zwischen dem ersten und zweiten Hülsenteil 3, 25 eingeklemmt. Das zweite Hülsenteil 25 stütz sich mit einem Teilbereich einer gehäusedeckelseitigen Stirnfläche am Gehäusedeckel 22 ab, so dass eine Verbindung des vom zweiten Hülsenteils 25 und der ersten Membran umschlossenen Volumens mit dem Raumbereich des Getriebes entsteht.

Eine weitere Membran 9, 23 ist in einer weiteren zweiteiligen Hülse 10,24 vorgesehen, die in entsprechender Weise angeordnet ist.

Der erste Hülsenteil 3 und das weitere erste Hülsenteil 10 sind mit einer teilweise geschlossenen Stirnfläche an der Zwischenwand fixiert. Eine Durchgangsöffnung in dem jeweiligen ersten Hülsenteil korrespondiert mit einer durchgehenden Ausnehmung in der Zwischenwand, so dass das vom jeweiligen ersten Hülsenteil 3, 10 und der Membran 2,20 bzw. der weiteren Membran 9,23 eingeschlossen Volumen über eine Entlüftungsöffnung 21 mit dem Raumbereich des Elektromotors verbunden ist.

Figur 2 zeigt beide Zustände der Membranen gleichzeitig. Je nach Luftdruckunterschied ist die erste Membran 2 im ersten Hülsenteil 3 oder im umgestülptem Zustand ist die erste Membran 20 im zweiten Hülsenteil 25 angeordnet. Die weitere Membran 9,23 ist in Figur 2 ebenfalls im ersten Zustand mit Bezugszeichen 9 und im umgestülpten Zustand mit Bezugszeichen 23 gezeigt.

Die Hülsenteile können auch einstückig mit dem Deckel bzw. dem Gehäuseteil 1 gefertigt werden, insbesondere gegossen werden.

Zwei Hülsen 3, 25; 10, 24 dienen dazu, das veränderliche Volumen im Raumbereich des Getriebes zu vergrößern und somit den Druck im Raumbereich des Getriebes länger konstant halten zu können.

Die Membran und die weitere Membran sind so angeordnet das der Raumbereich des Getriebes gegenüber dem Raumbereich des Elektromotors Öl- und Luftdicht ist.

Der Stator 11 des Elektromotors wird mittels elastisch verformbarer Bereiche 12 des Gehäuseteils 1 eingeklemmt, indem eine Schraube 13 zwei derartige aus dem sonstigen Gehäuseteil 1 auskragenden Bereiche aufeinander zieht.

Das Getriebe ist bei dem Kompaktantrieb als Stirnradgetriebe ausgeführt. Im Gegensatz zu einem Umlaufgetriebe, wie Planetengetriebe oder Zyklogetriebe, laufen die Verzahnungspartner bei einem Stirnradgetriebe nicht um. Durch die Druckausgleichselemente ist zusätzlicher, vom Gehäuse umbauter Raum nötig. Dieser zusätzlich umbaute Raum bietet den Vorteil, dass eine Oberfläche des Gehäuses möglichst konvex ausgeführt ist. Somit ist der Kompaktantrieb zum Beispiel in Anlagen der Getränkeindustrie oder in hygienic Bereichen einsetzbar, weil Flüssigkeiten an konvexen Oberflächen gut ablaufen.

Die Druckausgleichsmittel befinden sich in demjenigen Raumbereich, der bei einem gedachten Umlauf eines Verzahnungsteils am Umfang eines mit dem umlaufenden Verzahnungsteil im Eingriff stehenden Verzahnungsteils überdeckt wird. Somit ist im zusätzlichen Bauvolumen einerseits ein Druckausgleich für den Getriebebereich erreicht und andererseits ist an der Oberfläche des Gehäuses ein Abfließen von Flüssigkeiten gewährleistet. Dies ist insbesondere wichtig, wenn im Getriebebereich nicht nur Schmieröl, sondern auch Luft befüllt ist da bei Temperaturänderungen der Druck im Getriebebereich sich erheblich ändert. Da die Wellendichtringe nur einem definierten, bekannten Innendruck im Gehäuse standhalten, ist mittels der Druckausgleichsmittel die Dichtigkeit. beziehungsweise die Standzeit der Wellendichtringe verbessert. Temperaturänderungen beeinflussen die Standzeit der Wellendichtringe nur noch geringfügig.

Bei weiteren Ausführungsbeispielen, welche nicht Inhalt der Erfindung sind, sind die genannten Hülsenteile 3, 10 einstückig mit dem Gehäuseteil 1 ausgeführt. Ebenso sind die Hülsenteile 24, 25 einstückig mit dem Gehäusedeckel 22 ausführbar. Die Gussformen der beiden Teile sind schnell und einfach mit den mittels der Hülsen vorgebbaren Volumenbegrenzungen ausführbar.

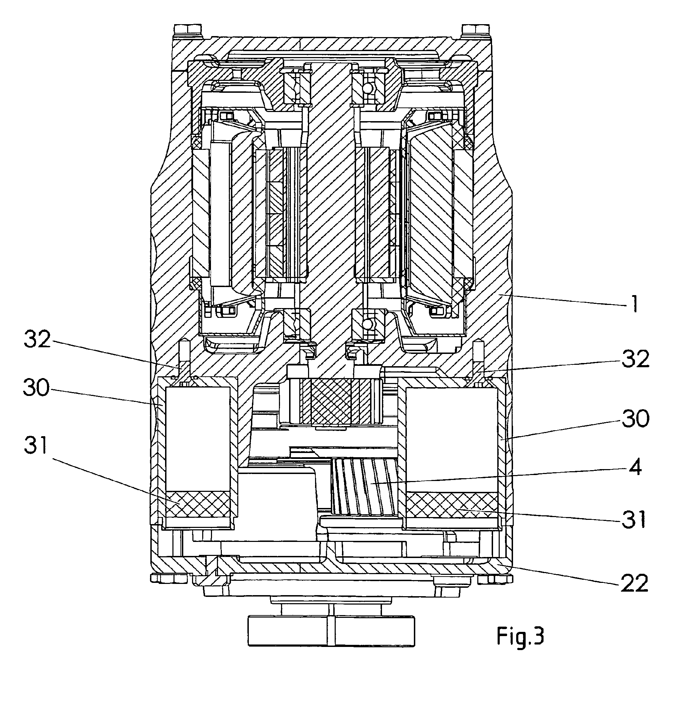

Bei den in den Figuren 3 bis 8 gezeigten Ausführungsbeispielen sind die Hülsen als Zylinder 30 einstückig mit einer geschlossen und einer offenen Stirnfläche ausgeführt. Die geschlossen Stirnfläche ist an der Zwischenwand festgeschraubt, so dass eine nicht gezeigte luftdurchlässige Verbindung zum Raumbereich des Elektromotors entsteht. Dafür weist die geschlossen Seite und die Stirnwand jeweils eine entsprechende Öffnung auf. Die offene Stirnfläche weist zum Raumbereich des Getriebes hin. Verschieden Trennungselemente trennen das Volumen im Zylinder in zwei luft- und öldicht voneinander getrennte Teilvolumina, welche jeweils entweder mit dem Raumbereich des Getriebes oder dem Raumbereich des Elektromotors verbunden sind.

In der Figur 3 ist ein anderer Kompaktantrieb gezeigt, welche nicht Inhalt der Erfindung ist, bei dem die Druckausgleichsmittel alternativ zu der vorbeschriebenen umstülpbaren Membran mittels eines in einem Zylinder 30 bewegbaren Kolbens 31 ausgeführt sind. Der Kolben trennt das Volumen im Zylinder 30 in zwei luft- und öldicht voneinander getrennter Teilvolumina. Ein Teilvolumen ist mit dem Raumbereich des Getriebes verbunden und ein zwischenwandseitiges Teilvolumen mit dem Raumbereich des Elektromotors. Dabei ist der Zylinder 30 mittels einer Schraube 32 an der Zwischenwand befestigt. Die Entlüftungsöffnung 21 ist in Figur 3 nicht sichtbar.

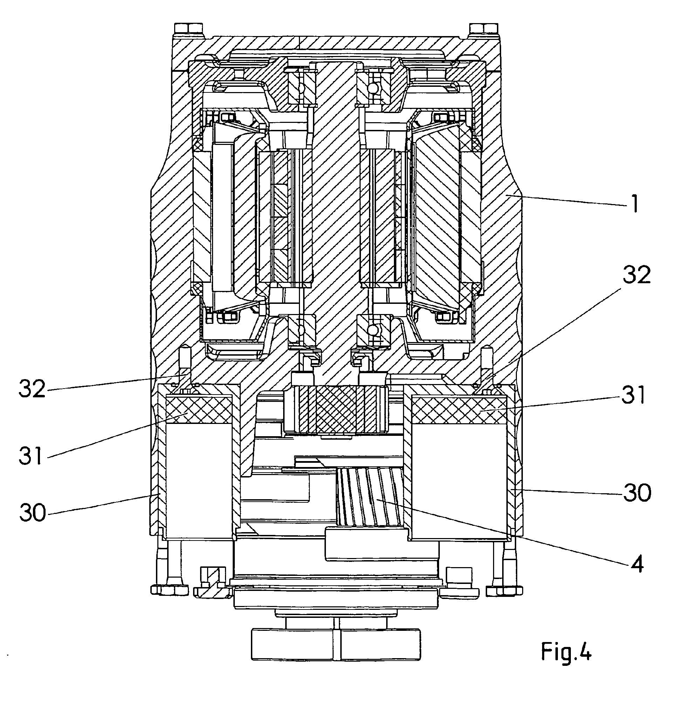

In der Figur 4 wird für das Ausführungsbeispiel nach Figur 3 eine andere Stellung des Kolbens 31 gezeigt. Dieser Fall tritt bei erhöhter Temperatur im Getriebe ein. Die Luft im Raumbereich des Getriebes dehnt sich aus und drückt den Kolben in Richtung Zwischenwand. Die Luft zwischen Kolben und des zwischenwandseitigen Teilvolumens in der Hülse wird durch die in Figur 4 nicht gezeigte Entlüftungsöffnung 21 in den Raumbereich des Elektromotors gedrückt. Bei niedrigen Temperaturen zieht sich die Luft und das Schmieröl im Getriebebereich zusammen und der Kolben geht in die Stellung nach Figur 3 zurück.

Bei weiteren Ausführungsbeispielen, welche nicht Inhalt der Erfindung sind; ist der Zylinder 30 mit dem Gehäuseteil 1 einstückig ausgeführt. Dann entfällt die Schraube 32.

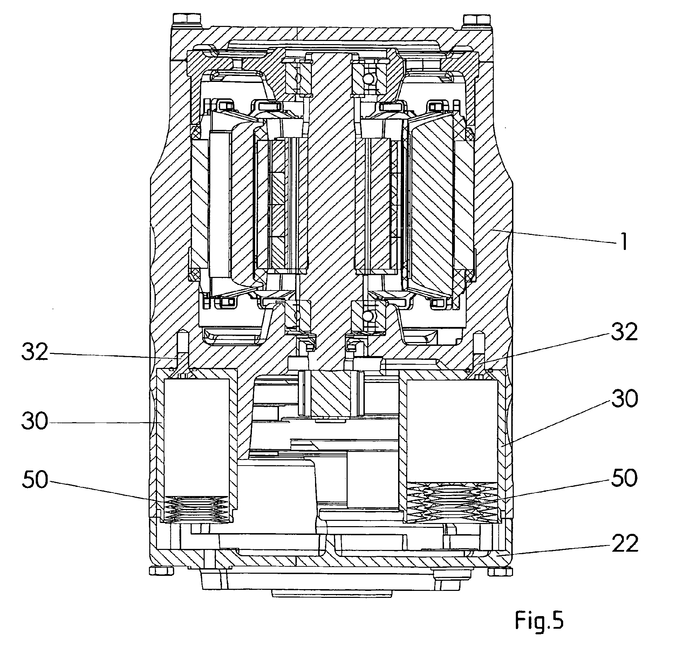

In der Figur 5 ist als alternatives Druckausgleichsmittel ein gehäusedeckelseitig am Zylinder 30 befestigter Faltenbalg 50 gezeigt. Die Entlüftungsöffnung 21 zum Raumbereich des Motors hin ist nicht gezeigt.

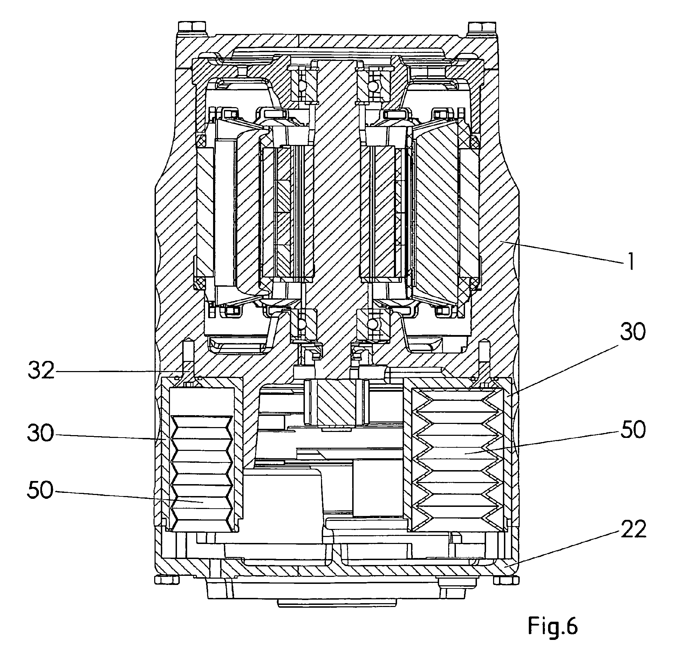

In der Figur 6 ist dasselbe Ausführungsbeispiel wie bei Figur 5 gezeigt, wobei der Faltenbalg maximal ausgefahren ist, weil die Temperatur im Getriebebereich höher ist als bei Figur 5.

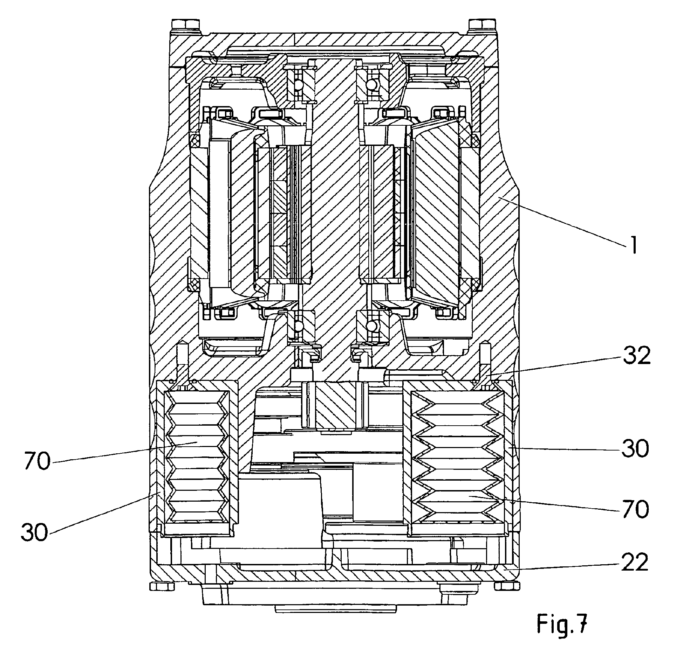

In der Figur 7 ist als wiederum alternatives Druckausgleichsmittel ein motorseitig im Zylinder 30 befestigter Faltenbalg 70 gezeigt, wobei die Entlüftungsöffnung 21 zum Raumbereich des Motors hin nicht gezeigt ist. Der Vorteil eines im entspannten Zustand ausgeklappten motorseitig befestigten Faltenbalgs ist, dass dieser einfacher, insbesondere mit Spritzdrucktechnik herstellbar ist.

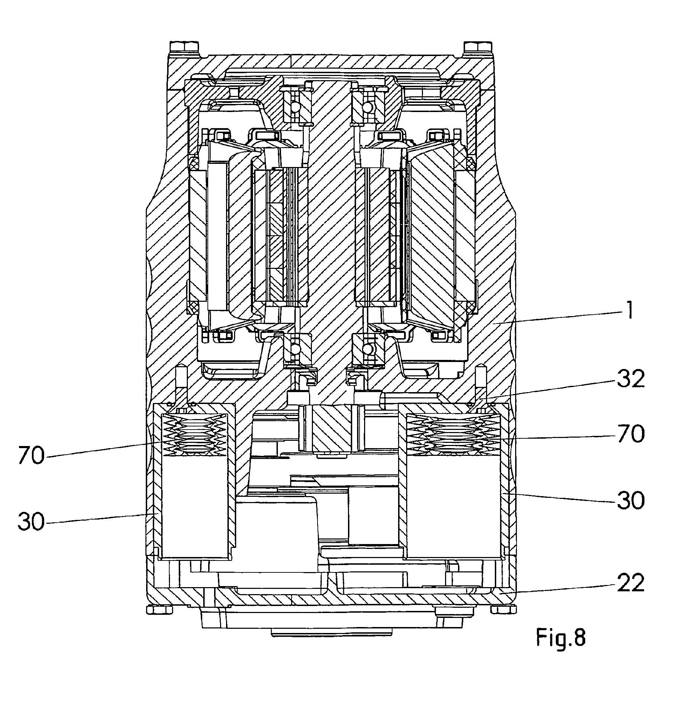

In der Figur 8 ist dasselbe Ausführungsbeispiel wie bei Figur 7 gezeigt, wobei der Faltenbalg eingefahren ist, weil die Temperatur im Getriebebereich höher ist als bei Figur 7.

Die Verwendung von Faltenbälgen bietet den Vorteil, dass das Material nicht wie bei einer umstülpbaren Membran um 180° gebogen wird. Dadurch bieten Faltenbälge eine erhöhte Standzeit. Ein Faltenbalg erlaubt auch eine kontinuierliche Volumenänderung und somit einen kontinuierlichen Druckausgleich. Dadurch entstehen keine Spitzendrücke über den gesamten kompensierbaren Druckunterschied, und die Gefahr von Undichtigkeiten an den Wellendichtringen ist geringer.

Bei einem weiteren Ausführungsbeispiel, welche nicht Inhalt der Erfindung ist, wird der Zylinder 30 als Kunststoffteil bzw. Kunststoffbehälter ausgeführt, in welchem die umstülpbare Membran oder der Faltenbalg in einem Mehrkomponentenspritzgießverfahren angespritzt vorgesehen ist. Somit ist dieses Kunststoffteil ins Gehäuseteil 1 einsteckbar, insbesondere hineinschlagbar, vorgesehen, wobei eine dichte Verbindung zur Entlüftungsöffnung 21 hergestellt wird. Dabei ist das Gehäuseteil aus Metall, wie Stahl oder Aluminium gefertigt.

Bei einem Gehäuseteil in Gusstechnik, kann die entsprechende Hülse als Zylindermantelfläche auch umgossen sein.

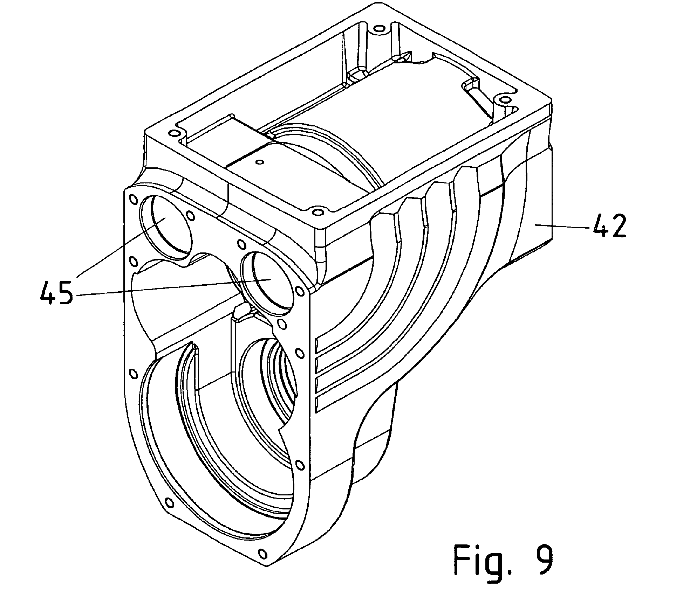

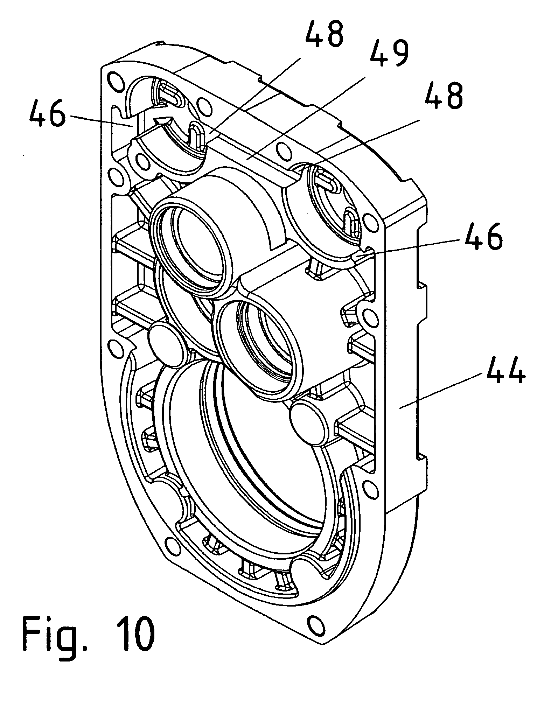

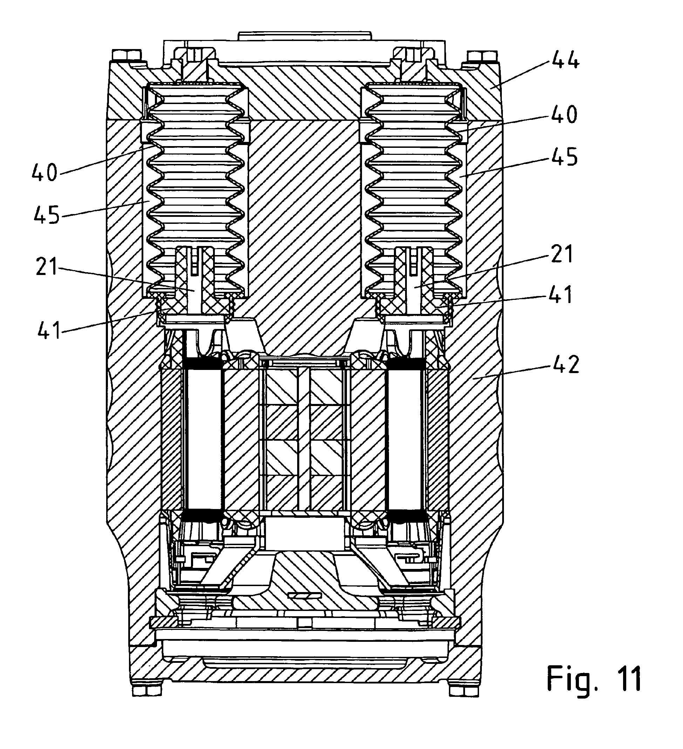

Bei der in den Figuren 9, 10 und 11 gezeigten abgewandelten Ausführung des erfindungsgemäßen Kompaktantriebs weist das Gehäuse des erfindungsgemäßen Kompaktantriebs ein weiteres Gehäuseteil 42 mit einem dazu korrespondierendem weiteren Deckel 44 auf. Das weitere Gehäuseteil 42 weist einen Raumbereich für einen Elektromotor und einen Raumbereich für ein Getriebe auf, welche durch eine Zwischenwand voneinander abgegrenzt sind.

Der weitere Deckel 44 dichtete gegebenenfalls mit weiteren Dichtmitteln, wie einer Papierdichtung, Wellendichtringen etc., den Raumbereich des Getriebes öldicht und luftdicht gegenüber der Umgebung des Kompaktantriebs ab. Im Raumbereich für das Getriebe des weiteren Gehäuseteils und im weiteren Deckel 44 sind entsprechende Lageraufnehmen und Wellendurchführungen zur Anordnung von entsprechenden Wellen mit Zahnrädern für ein Getriebe vorgesehen.

Das weitere Gehäuseteil 42 weist eine Ausnehmung, vorzugsweise als zylindrische Ausnehmung 45, auf. Die Ausnehmung schließt ein Volumen ein, welches mit dem Volumen des Raumbereichs des Elektromotors und dem Volumen des Raumbereichs des Getriebes verbunden ist. In der Ausnehmung ist ein Druckausgleichsmittel angeordnet, welches den Raumbereich des Elektromotors und den Raumbereich des Getriebes öl- und luftdicht voneinander trennt, so dass sich das Volumen des luftdicht und öldicht abgedichteten Raumbereich des Getriebes durch das veränderliche Teilvolumen in der Ausnehmung, welches mit dem Raumbereich im Getriebe verbunden ist, an einen Druck im Getriebe anpasst.

Dies erlaubt einen konstanten Druck im Raumbereich des Getriebes über einen gewissen Temperaturbereich. Weiter kann auf eine Entlüftung des Raumbereich Getriebes verzichtet werden. Daher kann auch kein Ölschaum an dem Kompaktantrieb austreten und der Raumbereich des Getriebes kann mit einer Einbaulage unabhängigen Ölmenge befüllt werden.

Im Gegensatz zu der in Figur 1 gezeigten Ausführungsform des Kompaktantriebs ist bei dem weiteren Gehäuseteil 42 ein Stator für den Elektromotor im Raumbereich für den Elektromotor eingeschrumpft.

In dem weiteren Gehäuseteil 42 ist die zylindrische Ausnehmung 45 zur Aufnahme von Faltenbälgen 40 angeordnet. Die zylindrische Ausnehmung 45 ist durch eine korrespondierende zylindrische Ausnehmung im Deckel 44 fortgesetzt. Die korrespondierende zylindrische Ausnehmung weist seitliche Ausnehmungen 46 auf. Dadurch ist das Volumen in der zylindrische Ausnehmung und der korrespondierenden zylindrischen Ausnehmung mit dem Volumen im Raumbereich des Getriebes verbunden, insbesondere strömungstechnisch verbunden.

Vorzugsweise sind zwei zylindrische Ausnehmungen 45 im weiteren Gehäuseteil 42 angeordnet. Dann ist im weiteren Deckel 44 ein Verbindungskanal 49 mit entsprechenden Öffnungen 48 zum Verbindungskanal 49 in den korrespondierenden Ausnehmungen angeordnet. Der Verbindungskanal 49 dient als strömungstechnische, d.h. druckausgleichende Verbindung der von den zwei zylindrischen Ausnehmungen 45 umschlossenen Volumina.

Ein Abschnitt der Zwischenwand bildet einen Boden für die zylindrische Ausnehmung 45. In den Boden ist ein Loch mit einem kleineren Durchmesser als die zylindrische Ausnehmung 45 konzentrisch zur zylindrischen Ausnehmung eingebracht.

Die Öffnungen 48 zum Verbindungskanal 49 und die seitlichen Ausnehmungen 46 sind vorzugsweise als seitliche Einschnitte in eine Zylinderwand der korrespondierenden zylindrischen Ausnehmung im weiteren Deckel 44 ausgeführt.

Der Faltenbalg 40 ist an einer Seite geschlossen und auf einer anderen Seite offen mit einem Montageabschnitt ausgeführt. Der Montageabschnitt weist vorzugsweise einen kleineren Durchmesser auf als der durchschnittliche Durchmesser eines gefalteten Bereichs des Faltenbalgs. Der Montageabschnitt geht durch eine verdickt ausgeführte, radial abstehende Stufe in den gefalteten Bereich über. an einer Außenfläche des Montageabschnittes sind zwei umlaufende Wülste als Abdichtlippen angeformt.

Im Faltenbalg 40 ist eine Einführhülse 41 angeordnet. Die Einführhülse 41 liegt mit einer Umfangsfläche eines Scheibenabschnitts innen an dem Montageabschnitt des Faltenbalgs 40 an. Ein sich einseitig an den Scheibenabschnitt anschließender Zylinderabschnitt der Einführhülse 41 ragt in den gefalteten Bereich hinein.

Der Montagebereich des Faltenbalgs 40 ist zusammen mit der Einführhülse 41 in das Loch im Boden der zylindrischen Ausnehmung 45 gedrückt. Dabei schließen die umlaufenden Wülste das Volumen in der zylindrischen Ausnehmungen, welche außerhalb des Faltenbalgs liegt, dicht gegenüber dem Raumbereich des Elektromotors ab. Als weitere Abdichtung und Anschlag für die definierte Tiefe des Eindrückens dient die verdickt ausgeführte, radial abstehende Stufe im Faltenbalg 40.

Die Einführhülse 41 bildet die Entlüftungsöffnung 21 des vom Faltenbalg eingeschlossenen Volumens zum Raumbereich des Elektromotors hin. Ein freistehender Endbereich des Zylinderabschnitts weist einen Einschnitt auf. Dieser verhindert ein Abdichten der Entlüftungsöffnung 21 durch die geschlossene Seite des Faltenbalgs 40 bei zusammengedrückten Faltenbalg 40.

Bei der maximalen Längenausdehnung liegt die geschlossene Seite des Faltenbalgs am weiteren Deckel 44 an. Sinkt der Druck im Raumbereich des Getriebes weiter, so bläht sich der Faltenbalg 40 auf und legt sich an eine Innenwand der zylindrischen Ausnehmung 45 an.

Die Membranen oder Faltenbalge sind vorzugsweise aus einem Elastomer, wie zum Beispiel einem Fluorkautschuk oder Nitrilkautschuk, insbesondere NBR oder HNBR oder FKM gefertigt. Die Hülse bzw. die Membran oder der Faltenbalg können auch ein- bzw. angeschlagen werden, um eine dichte Verbindung mit den korrespondierenden Elementen zu erhalten.

Somit ist das Getriebe mit Schmieröl befüllbar und gegen die Umgebung und den Raumbereich des Elektromotors abgedichtet. Ein Entlüftungsventil, welches üblicherweise den Raumbereich des Getriebes mit der Umgebung verbindet, ist nicht nötig. Dadurch kann kein Ölschaum in die Umgebung entweichen und der Raumbereich des Getriebes muss nicht mehr atmen', d.h. tauscht auch keine Luft zwischen Wellendichtring und Welle mit der Umgebung aus. Dies verringert die Belastung der Wellendichtringe und die Verunreinigung des Schmieröls. Dadurch ist die Standzeit des Schmieröls und der Wellendichtringe und somit des Getriebes erhöht.

### Bezugszeichenliste

- 1: Gehäuseteil
- 2: erste Membran (Ausgangszustand)
- 3: erstes Hülsenteil
- 4: Zahnrad
- 5: Lager
- 6: Wellendichtring
- 7: Lager der Zwischenwelle
- 8: Lager
- 9: weitere Membran
- 10: weiteres erstes Hülsenteil
- 11: Stator
- 12: elastisch verformbare Bereich des Gehäuseteils 1
- 13: Schraube
- 20: erste Membran (umgestülpt, erwärmter Zustand)
- 21: Entlüftungsöffnung zum Raumbereich des Elektromotors
- 22: Gehäusedeckel
- 23: weitere Membran im umgestülpten Zustand
- 24: weiteres zweites Hülsenteil
- 25: zweites Hülsenteil
- 30: Zylinder
- 31: Kolben
- 32: Schraube
- 40: Faltenbalg
- 41: Einführhülse
- 42: weiteres Gehäuseteil
- 44: weiterer Gehäusedeckel
- 45: zylinderförmige Ausnehmung
- 46: seitliche Ausnehmung
- 48: Öffnung zum Verbindungskanal
- 49: Verbindungskanal
- 50: gehäusedeckelseitig befestigter Faltenbalg
- 70: motorseitig befestigter Faltenbalg

## Patentansprüche

1. Kompaktantrieb,
umfassend einen Raumbereich für Getriebe, einen Raumbereich für einen Elektromotor, und einen Raumbereich für eine elektronische Schaltung,
wobei Druckausgleichsmittel in dem Raumbereich für das Getriebe angeordnet sind und den Raumbereich für das Getriebe mit dem Raumbereich für den Elektromotor druckausgleichend verbinden,
**dadurch gekennzeichnet, dass**
die Druckausgleichsmittel einen Faltenbalg (40) umfassen,
wobei im Faltenbalg (40) eine Einführhülse (41) angeordnet ist, wobei die Einführhülse (41) die Entlüftungsöffnung (21) des vom Faltenbalg (40) eingeschlossenen Volumens zum Raumbereich des Elektromotors hin bildet,
wobei die Elnführhülse (41) mit einer Umfangsfläche eines Scheibenabschnitts innen anliegt an einem Montageabschnitt des Faltenbalgs (40),
wobei ein sich einseitig an den Scheibenabschnitt anschließender Zylinderabschnitt der Einführhülse (41) in den gefalteten Bereich hineinragt,
wobei der Montagebereich des Faltenbalgs (40) ist zusammen mit der Einführhülse (41) In ein Loch im Boden der zylindrischen Ausnehmung (45) gedrückt wird,
wobei umlaufende Wülste das Volumen in der zylindrischen Ausnehmung (45), welche außerhalb des Faltenbalgs (40) liegt, dicht gegenüber dem Raumbereich des Elektromotors abschließen,
wobei als weitere Abdlchtung und Anschlag für die definierte Tiefe des Eindrückens die verdickt ausgeführte, radial abstehende Stufe im Faltenbalg (40) dient,
wobei ein freistehender Endbereich des Zylinderabschnitts einen Einschnitt auf weist.

2. Kompaktantrieb nach Anspruch 1,
**dadurch gekennzeichnet, dass**
die Druckausgleichsmittel in demjenigen Teilbereich des Raumbereiches für das Getriebe angeordnet sind, der bei einem gedachten Umlauf eines Verzahnungsteils am Umfang eines mit dem Verzahnungsteil im Eingriff stehenden, weiteren Verzahnungsteils überdeckt ist.

3. Kompaktantrieb nach einem der vorangegangenen Ansprüche,
**dadurch gekennzeichnet, dass**
das Getriebe zumindest eine in einer Ebene angeordnete Zahnräder umfassende Stirnradstufe aufweist, wobei die Druckausgleichsmittel in der Ebene der Zahnräder angeordnet sind.

4. Kompaktantrieb nach einem der vorangegangenen Ansprüche,
**dadurch gekennzeichnet, dass**
die Druckausgleichsmittel in einer zu den Achsen der Zahnräder des Getriebes senkrechten Ebene angeordnet sind.

5. Kompaktantrieb nach einem der vorangegangenen Ansprüche,
**dadurch gekennzeichnet, dass**
die elektronische Schaltung als Umrichter oder als Sanftanlaufelektronik für den Elektromotor ausgeführt ist.

6. Kompaktantrieb nach einem der vorangegangenen Ansprüche,
**dadurch gekennzeichnet, dass**
der Elektromotor aus der elektronischen Schaltung speisbar ist, wobei das Getriebe mittels des Elektromotors antreibbar ist.

7. Kompaktantrieb nach einem der vorangegangenen Ansprüche,
**dadurch gekennzeichnet, dass**
der Raumbereich des Elektromotors und der Raumbereich der elektronischen Schaltung mittels einer luftdurchlässigen Öffnung (48) in einem den Raumbereich des Elektromotors und den Raumbereich des Getriebes zumindest teilweise gehäusebildend umgebendes Gehäuseteil (1) verbunden sind.

8. Kompaktantrieb nach einem der vorangegangenen Ansprüche,
**dadurch gekennzeichnet, dass**
das Getriebe zumindest teilweise mit Schmieröl und/oder Luft befüllt ist.

9. Kompaktantrieb nach einem der vorangegangenen Ansprüche.
**dadurch gekennzeichnet, dass**
der Raumbereich des Getriebes zur Umgebung hin mittels eines Wellendichtrings um eine Abtriebswelle herum abgedichtet ist.

10. Kompaktantrieb nach einem der vorangegangenen Ansprüche,
**dadurch gekennzeichnet, dass**
der Faltenbalg (40) je eins der Teilvolumina, welche im Luftaustausch mit dem Raumbereich des Elektromotors beziehungsweise mit dem Raumbereich des Getriebes stehen, luft- und öldicht trennt, so dass bei entsprechender Temperatur im Raumbereich des Getriebes die jeweiligen Teilvolumina minimal oder maximal sind.

11. Kompaktantrieb nach einem der vorangegangenen Ansprüche,
**dadurch gekennzeichnet, dass**
das Volumen des Faltenbalgs von der Temperatur des Getriebes bestimmt ist, insbesondere im Wesentlichen ausschließlich.

## Claims

1. A compact drive,
comprising a spatial region for [a] transmission, a spatial region for an electric motor, and a spatial region for an electronic circuit,
wherein pressure compensation means are arranged in the spatial region for the transmission and connect the spatial region for the transmission with the spatial region for the electric motor in a pressure-compensating manner,
**characterised in that**
the pressure compensation means comprise a bellows (40),
with an introduction bush (41) being arranged in the bellows (40), the introduction bush (41) forming the vent opening (21) of the volume enclosed by the bellows (40) towards the spatial region of the electric motor,
the introduction bush (41) lying internally with a peripheral surface of a disc section on a mounting section of the bellows (40),
a cylindrical section of the introduction bush (41) which adjoins the disc section on one side projecting into the folded region,
the mounting region of the bellows (40) is [sic] together with the introduction bush (41) being pressed into a hole in the bottom of the cylindrical recess (45),
circumambient beads hermetically closing off the volume in the cylindrical recess (45) which lies outside the bellows (40) from the spatial region of the electric motor,
with the thickened, radially projecting step in the bellows (40) serving as a further sealing means and stop for the defined depth of pressing-in,
a free-standing end region of the cylindrical section having an incision.

2. A compact drive according to Claim 1, **characterised in that** the pressure compensation means are arranged **in that** partial region of the spatial region for the transmission which is covered in the case of an imaginary revolution of a toothed part on the periphery of a further toothed part which is engaged with the toothed part.

3. A compact drive according to one of the preceding claims, **characterised in that** the transmission has at least one spur-gear stage comprising gear wheels arranged in a plane, the pressure compensation means being arranged in the plane of the gear wheels.

4. A compact drive according to one of the preceding claims, **characterised in that** the pressure compensation means are arranged in a plane perpendicular to the axes of the gear wheels of the transmission.

5. A compact drive according to one of the preceding claims, **characterised in that** the electronic circuit is embodied as a converter or as soft-start electronics for the electric motor.

6. A compact drive according to one of the preceding claims, **characterised in that** the electric motor can be fed from the electronic circuit, the transmission being able to be driven by means of the electric motor.

7. A compact drive according to one of the preceding claims, **characterised in that** the spatial region of the electric motor and the spatial region of the electronic circuit are connected by means of an opening (48) which is pervious to air in a housing part (1) which surrounds the spatial region of the electric motor and the spatial region of the transmission at least in partially housing-forming manner.

8. A compact drive according to one of the preceding claims, **characterised in that** the transmission is filled at least partially with lubricating oil and/or air.

9. A compact drive according to one of the preceding claims, **characterised in that** the spatial region of the transmission is sealed off towards the surroundings by means of a shaft sealing ring around an output shaft.

10. A compact drive according to one of the preceding claims, **characterised in that** the bellows (40) separates, in an air-tight and oil-tight manner, one each of the partial volumes which are in the air exchange with the spatial region of the electric motor or with the spatial region of the transmission, so that the respective partial volumes are minimal or maximal at a corresponding temperature in the spatial region of the transmission.

11. A compact drive according to one of the preceding claims, **characterised in that** the volume of the bellows is determined by the temperature of the transmission, in particular substantially exclusively.

## Revendications

1. Entraînement compact
comprenant une zone d'espace dévolue à une transmission, une zone d'espace dévolue à un moteur électrique et une zone d'espace dévolue à un circuit électronique,
des moyens d'équilibrage de pression étant logés dans la zone d'espace dévolue à la transmission, et reliant ladite zone d'espace dévolue à la transmission à la zone d'espace dévolue au moteur électrique, avec effet d'équilibrage de pression,
**caractérisé par le fait que**
les moyens d'équilibrage de pression incluent un soufflet (40),
sachant qu'une douille insérable (41) est disposée dans le soufflet (40), ladite douille insérable (41) constituant l'orifice (21) qui instaure la ventilation du volume confiné par ledit soufflet (40), et qui mène à la zone d'espace du moteur électrique,
ladite douille insérable (41) étant intérieurement en applique contre une zone de montage dudit soufflet (40), par une surface du pourtour d'un segment discoïdal,
sachant qu'un tronçon cylindrique de ladite douille insérable (41), se rattachant d'un côté audit segment discoïdal, pénètre dans la région plissée,
sachant que la région de montage dudit soufflet (40) est enfoncée, conjointement à ladite douille insérable (41), dans un trou pratiqué dans le fond de l'évidement cylindrique (45), sachant que des bourrelets périphériques assurent l'obturation étanche, vis-à-vis de ladite zone d'espace du moteur électrique, du volume intérieur dudit évidement cylindrique (45) situé à l'extérieur dudit soufflet (40),
sachant que le gradin de réalisation épaissie, faisant radialement saillie dans ledit soufflet (40), procure un étanchement et une butée supplémentaires dédiés à la profondeur d'enfoncement bien définie,
une région extrême libre dudit tronçon cylindrique étant pourvue d'une entaille.

2. Entraînement compact selon la revendication 1,
**caractérisé par le fait que**
les moyens d'équilibrage de pression se trouvent dans la région partielle de la zone d'espace dévolue à la transmission qui, lors d'une révolution imaginaire d'une partie dentée, est recouverte sur le pourtour d'une autre partie dentée en prise avec ladite partie dentée.

3. Entraînement compact selon l'une des revendications précédentes,
**caractérisé par le fait que**
la transmission présente au moins un étage d'engrenage à denture droite, comportant des roues dentées situées dans un plan, les moyens d'équilibrage de pression étant disposés dans ledit plan desdites roues dentées.

4. Entraînement compact selon l'une des revendications précédentes,
**caractérisé par le fait que**
les moyens d'équilibrage de pression sont disposés dans un plan perpendiculaire aux axes des roues dentées de la transmission.

5. Entraînement compact selon l'une des revendications précédentes,
**caractérisé par le fait que**
le circuit électronique est réalisé sous la forme d'un convertisseur, ou d'une électronique de démarrage en douceur dévolue au moteur électrique.

6. Entraînement compact selon l'une des revendications précédentes,
**caractérisé par le fait que**
le moteur électrique peut être alimenté à partir du circuit électronique, la transmission pouvant être entraînée au moyen dudit moteur électrique.

7. Entraînement compact selon l'une des revendications précédentes,
**caractérisé par le fait que**
la zone d'espace du moteur électrique et la zone d'espace du circuit électronique sont raccordées, au moyen d'un orifice (48) perméable à l'air, dans une partie d'enveloppement (1) qui entoure ladite zone d'espace du moteur électrique et la zone d'espace de la transmission, en formant au moins partiellement un carter.

8. Entraînement compact selon l'une des revendications précédentes,
**caractérisé par le fait que**
la transmission est emplie d'huile de lubrification et/ou d'air, au moins en partie.

9. Entraînement compact selon l'une des revendications précédentes,
**caractérisé par le fait que**
l'étanchéité de la zone d'espace de la transmission, en direction de l'espace environnant, est instaurée au moyen d'une bague d'étanchement ceinturant un arbre de sortie.

10. Entraînement compact selon l'une des revendications précédentes,
**caractérisé par le fait que**
le soufflet (40) sépare, avec étanchéité à l'air et à l'huile, l'un respectif des volumes partiels qui sont respectivement en relation d'échange d'air avec la zone d'espace du moteur électrique, ou avec la zone d'espace de la transmission, de telle sorte que les volumes partiels considérés soient minimaux, ou maximaux, lorsqu'il règne une température correspondante dans ladite zone d'espace de la transmission.

11. Entraînement compact selon l'une des revendications précédentes,
**caractérisé par le fait que**
le volume du soufflet est déterminé, en particulier de manière sensiblement exclusive, par la température de la transmission.
